# EUROPÄISCHE PATENTSCHRIFT

(11) **EP 0 433 654 B1**
(45) Veröffentlichungstag und Bekanntmachung des Hinweises auf die Patenterteilung: **16.06.1993**
(21) Anmeldenummer: 90121761.2
(22) Anmeldetag: 14.11.1990
(51) Int. Cl.: H01M 10/54, C01D 7/07

(54) **Verfahren zur Entsorgung von Natriumpolysulfid aus verbrauchten Natrium/Schwefel-Batterien**
Process for the recovery of sodium polysulphide from spent sodium/sulphur batteries
Procédé pour la récupération de polysulphure de natrium de batteries en natrium/soufre usées

(30) Priorität: 22.12.1989 DE 3942516
(43) Veröffentlichungstag der Anmeldung: 26.06.1991
(73) Patentinhaber: Degussa Aktiengesellschaft, 60311 Frankfurt (DE)
(72) Erfinder: Bilger, Edgar, Dr., W-6467 Hasselroth (DE); Gubisch, Urban, W-6460 Gelnhausen 2 (DE)

(56) Entgegenhaltungen:
- EP-A- 0 032 248
- THE ELECTROCHEMICAL SOCIETY EXTENDED ABSTRACTS, PENNINGTON, NJ, USA Band 81-82, Oktober 1981, Seiten 51-52; J.P.PEMSLER ET AL: " RECYCLE OF BATTERY COMPONENTS "

## Beschreibung

Die Erfindung betrifft ein Verfahren zur Entsorgung von Natriumpolysulfid aus verbrauchten Natrium/Schwefel-Batterien unter Gewinnung einer alkalischen Natriumthiocyanatlösung. Natriumthiocyanat findet u. a. Anwendung in der chemischen und pharmazeutischen Industrie zur Herstellung von organischen Thiocyanaten, Isothiocyanaten, Senfölen, Herbiziden, Pestiziden und Bioziden, in der Fotoindustrie zum Tönen, Sensibilisieren und Stabilisieren und zur Herstellung von Glanzbildnern in der Galvanotechnik.

In der Literatur ist kein Verfahren zur Entsorgung von Natriumpolysulfid aus Na/S-Batterien unter gleichzeitiger Gewinnung von Natriumthiocyanat bekannt.

Der Erfindung liegt die Aufgabe zugrunde, Natriumpolysulfid aus verbrauchten Natrium/Schwefel-Batterien unter Gewinnung eines Wirtschaftsgutes, nämlich von Natriumthiocyanat in Form einer alkalischen oder sodaalkalischen Lösung zu entsorgen.

Die Aufgabe wird nach einer ersten von zwei erfindungsgemäßen Verfahrensweisen gelöst durch mechanische Zerkleinerung der Batterien oder der aus den Batteriegehäusen entnommenen, Natriumpolysulfid und gegebenenfalls Natriumreste enthaltenden Zellensätze zu einem feinteiligen Schrot von bis 30 mm Korndurchmesser, Behandeln des Schrots mit einer wäßrigen Natriumcyanidlösung,deren Cyanidgehalt zum vorliegenden, aus S⁰ oder S⁻² bestehenden Gesamtschwefel im Molverhältnis 1 : 1 steht unter Rühren, Trennen der unlöslichen Anteile des Schrots von der Lösung, Versetzen der Lösung mit, bezogen auf den Gesamtschwefel, 0,1 bis 20 Gew.% Braunstein als Katalysator und selektives Oxidieren des sulfidischen Schwefels mittels Durchleiten von Luft bei Temperaturen im Bereich von Raumtemperatur bis 110° C zur intermediären Bildung von elementarem Schwefel und zu dessen Abreagieren mit dem vorhandenen restlichen Natriumcyanid zu Natriumthiocyanat.

Wichtige Schritte dieser Verfahrensweise sind also das Shreddern der verbrauchten Batterien zu feinteiligem Schrot, Eintragen des Schrots in eine wäßrige Natriumcyanidlösung und Umsetzen unter Ausnutzung der Reaktionswärme, das Abtrennen der nicht reagierenden Anteile, die selektive Oxidation des sulfidischen Schwefels zu elementarem Schwefel und eine insitu-Umsetzung mit freiem Natriumcyanid zu Natriumthiocyanat. Dabei kommt der selektiven Oxidation des sulfidischen Schwefels in Anwesenheit von Braunstein und der Verwendung von Luft als Oxidationsmittel besondere Bedeutung zu.

Nach einer alternativen Verfahrensweise wird dieselbe Aufgabe gelöst durch mechanische Zerkleinerung der Batterien oder der aus den Batteriegehäusen entnommenen, Natriumpolysulfid und gegebenenfalls Natriumreste enthaltenden Zellensätze zu einem feinteiligen Schrot von bis 30 mm Korndurchmesser, Versetzen einer wäßrigen Natriumcyanidlösung, deren Cyanidgehalt zum vorliegenden, aus S⁰ oder S⁻² bestehenden Gesamtschwefel im Molverhältnis 1 : 1 steht unter Rühren mit dem Schrot und mit, bezogen auf den Gesamtschwefel, 0,1 bis 20 Gew.% Braunstein als Katalysator, selektives Oxidieren des sulfidischen Schwefels mittels Durchleiten von Luft bei Temperaturen im Bereich von Raumtemperatur bis 110° C zur intermediären Bildung von elementarem Schwefel und zu dessen Abreagieren mit dem vorhandenen restlichen Natriumcyanid zu Natriumthiocyanat und Abtrennen der unlöslichen Anteile von der wäßrigen Lösung des Natriumthiocyanatprodukts.

Bei diesem etwas abgewandelten Verfahrensgang wird also vorgelegte Natriumcyanidlösung unter Rühren mit dem Schrot und dem Katalysator versetzt und reagieren gelassen. Dann wird die Luftoxidation durchgeführt und zuletzt werden die unlöslichen Stoffe aus der Lösung des entstandenen Natriumthiocyanats entfernt.

Im Verfahren nach beiden Alternativen werden wäßrige Natriumcyanidlösungen mit einem Gehalt von 15 - 35 Gew.% eingesetzt; vorzugsweise beträgt die Konzentration 20 - 30 Gew.%.

Die Umsetzung des Polysulfids mit dem Cyanid ist jeweils exotherm. Ein Nachheizen bis zur Siedetemperatur ist günstig. Um die Reaktion des formal nullwertigen Schwefels mit dem Natriumcyanid quantitativ durchzuführen, hat es sich als vorteilhaft erwiesen, eine Nachreaktionszeit von 1 - 40, vorzugsweise 5 - 30 Minuten, bei Rückflußtemperatur einzuhalten. Nach beendigter Umsetzung dieses Schwefelanteils wird der sulfidische Schwefel mittels Durchblasen von Luft durch das Reaktionsgemisch in Anwesenheit des Katalysators selektiv zu Schwefel oxidiert und in situ mit freiem Natriumcyanid zu Natriumthiocyanat umgesetzt.

Für beide Verfahrensweisen sind eine Reihe vorteilhafter Varianten gleichermaßen anwendbar, die nachfolgend vorgestellt werden:

So hat es sich als günstig erwiesen, wenn die mechanische Zerkleinerung der Batterien oder der Zellensätze unter Wasserdampfatmosphäre oder Inertgas erfolgt.

Bevorzugt zerkleinert man die Batterien oder die Zellensätze zu Schrot von < 10 mm Korndurchmesser.

Um die Einwirkung der Natriumcyanidlösung auf das Schrot zu intensivieren, kann man das Schrot mit der Lösung bzw. (beim Arbeiten nach der alternativen Verfahrensweise des Anspruchs 2) mit dieser in Anwesenheit des Katalysators unter Nachheizen auf Siedetemperatur behandeln.

Aus dem beanspruchten Gesamtbereich der einsetzbaren Katalysatorkonzentration hat sich der Einsatz von 2 - 7 Gew.% Katalysator, bezogen auf den Gesamtschwefel, besonders bewährt.

Zum selektiven Oxidieren des sulfidischen Schwefels genügt im allgemeinen die durch das Einblasen von Luft in die Reaktorfüllung zustandekommende Turbulenzbewegung; noch besser rührt man jedoch die Reaktionsmischung während des Durchleitens der Luft.

Am elegantesten läßt sich die selektive Oxidation des sulfidischen Schwefels bei 50 - 80° C durchführen.

Die nach beiden erfindungsgemäßen Verfahrensweisen erhältliche, das Natriumthiocyanat enthaltende, Produktlösung ist wegen ihres Gehalts an Natriumhydroxid alkalisch. Nach einer vorteilhaften Ausführungsform der Erfindung kann die alkalische Reaktion vermindert werden, indem das in der Lösung des Natriumthiocyanatprodukts enthaltene Natriumhydroxid mittels Durchleiten bzw. Einblasen von Kohlendioxid in Natriumcarbonat umgewandelt und das als Feststoff ausgefallene oder durch Kühlen ausgefällte Carbonat aus der dann sodaalkalischen Produktlösung entfernt wird, was durch Filtrieren geschehen kann.

Beim Arbeiten nach der Erfindung werden Thiocyanat-Ausbeuten bis 98,7 %, bezogen auf den eingesetzten Gesamtschwefel, erreicht.

Die Erfindung wird anhand der folgenden Beispiele näher erläutert.

### Beispiel 1

In einem mit Rührer, Rückflußkühler, Thermometer und verschließbarem Einfüllstutzen versehenen Dreihalskolben mit Heizhaube werden 250 g Natriumcyanid 98 % (7 Mol) in 1150 g Wasser gelöst. Unter Rühren werden rasch 353 g Schrot aus zuvor in Wasserdampfatmosphäre geshredderten Zellensätzen mit einem Gesamtschwefelgehalt von 63,6 Gew.% (7 Mol) eingetragen. Durch die exotherme Reaktion steigt die Temperatur von 25° C auf 95° C an. Es wird weiter erhitzt bis zur Siedetemperatur (110° C) und 20 Min. gerührt. Das Reaktionsgemisch wird über ein Weißbandfilter scharf abgesaugt und in ein Glasrohr mit unten eingeschmolzener Fritte überführt, mit 45 g Braunstein MnO₂ versetzt, auf 65° C erwärmt und 424 Normalliter Luft (3,98 Mol O₂) von unten durchgeleitet. Nach Abkühlen auf Raumtemperatur werden 44,8 Normalliter Kohlendioxid (2 Mol) von unten durch die Reaktionslösung geleitet. Der pH-Wert sinkt dabei von pH 13,5 auf pH 8,0 ab. Der ausgefallene Niederschlag wird abgesaugt. Das Filtrat enthält 6.91 Mol Natriumthiocyanat = 98,7 % Ausbeute.

### Beispiel 2

In einem mit Rührer, Rückflußkühler, Thermometer und verschließbarem Einfüllstutzen versehenen Dreihalskolben werden 150 g Natriumcyanid 98 % (3 Mol) in 550 g Wasser gelöst. Unter Rühren wird schnell 250 g geshreddertes Zellenmaterial mit 38,4 Gew.% Gesamtschwefel (3 Mol) eingetragen. Durch die exotherme Reaktion steigt die Temperatur von Raumtemperatur auf 93° C an. Es wird weiter erhitzt bis zur Siedetemperatur (110° C) und 7 Min. bei dieser Temperatur gerührt. Dann werden 0,096 g Braunstein MnO₂ zugegeben, ein Glasrohr mit unten angeschmolzener Fritte in das Reaktionsgemisch eingeführt und bei 110° C durch dieses Rohr 200 Normalliter Luft (1,88 Mol O₂) in das Reaktionsgemisch eingeleitet. Das heiße Reaktionsgemisch wird scharf abgesaugt, auf Raumtemperatur abgekühlt und in ein Glasrohr mit unten eingeschmolzener Fritte gefüllt. Dann werden 22,4 Normalliter Kohlendioxid (1 Mol) von unten durch die Lösung geleitet. Der pH-Wert sinkt dabei von pH 13,0 auf pH 8,0. Der ausgefallene Niederschlag wird abgesaugt. Die Lösung enthält 2,79 Mol Natriumthiocyanat = 93,1 % Ausbeute.

## Patentansprüche

1. Verfahren zur Entsorgung von Natriumpolysulfid aus verbrauchten Natrium/Schwefel-Batterien unter Gewinnung einer alkalischen Natriumthiocyanatlösung,
**gekennzeichnet durch**
mechanische Zerkleinerung der Batterien oder der aus den Batteriegehäusen entnommenen, Natriumpolysulfid und gegebenenfalls Natriumreste enthaltenden Zellensätze zu einem feinteiligen Schrot von bis 30 mm Korndurchmesser, Behandeln des Schrots mit einer wäßrigen Natriumcyanidlösung, deren Cyanidgehalt zum vorliegenden, aus S⁰ oder S⁻² bestehenden Gesamtschwefel im Molverhältnis 1 : 1 steht unter Rühren, Trennen der unlöslichen Anteile des Schrots von der Lösung, Versetzen der Lösung mit, bezogen auf den Gesamtschwefel, 0,1 bis 20 Gew.% Braunstein als Katalysator und selektives Oxidieren des sulfidischen Schwefels mittels Durchleiten von Luft bei Temperaturen im Bereich von Raumtemperatur bis 110° C zur intermediären Bildung von elementarem Schwefel und zu dessen Abreagieren mit dem vorhandenen restlichen Natriumcyanid zu Natriumthiocyanat.

2. Verfahren zur Entsorgung von Natriumpolysulfid aus verbrauchten Natrium/Schwefel-Batterien unter Gewinnung einer alkalischen Natriumthiocyanatlösung,
**gekennzeichnet durch**
mechanische Zerkleinerung der Batterien oder der aus den Batteriegehäusen entnommenen, Natriumpolysulfid und gegebenenfalls Natriumreste enthaltenden Zellensätze zu einem feinteiligen Schrot von bis 30 mm Korndurchmesser, Versetzen einer wäßrigen Natriumcyanidlösung, deren Cyanidgehalt zum vorliegenden, aus S⁰ oder S⁻² bestehenden Gesamtschwefel im Molverhältnis 1 : 1 steht unter Rühren mit dem Schrot und mit, bezogen auf den Gesamtschwefel, 0,1 bis 20 Gew.% Braunstein als Katalysator, selektives Oxidieren des sulfidischen Schwefels mittels Durchleiten von Luft bei Temperaturen im Bereich von Raumtemperatur bis 110°C zur intermediären Bildung von elementarem Schwefel und zu dessen Abreagieren mit dem vorhandenen restlichen Natriumcyanid zu Natriumthiocyanat und Abtrennen der unlöslichen Anteile von der wäßrigen Lösung des Natriumthiocyanatprodukts.

3. Verfahren nach Anspruch 1 oder 2,
**dadurch gekennzeichnet,**
daß die mechanische Zerkleinerung der Batterien oder der Zellensätze unter Wasserdampfatmosphäre oder Inertgas erfolgt.

4. Verfahren nach den Ansprüchen 1 bis 3,
**dadurch gekennzeichnet,**
daß die Batterien oder die Zellensätze zu Schrot von < 10 mm Korndurchmesser zerkleinert werden.

5. Verfahren nach den Ansprüchen 1 bis 4,
**dadurch gekennzeichnet,**
daß man das Schrot mit der Natriumcyanidlösung bzw. beim Arbeiten nach Anspruch 2, mit dieser in Anwesenheit des Katalysators unter Nachheizen auf Siedetemperatur behandelt.

6. Verfahren nach den Ansprüchen 1 bis 5,
**dadurch gekennzeichnet,**
daß man 2 - 7 Gew.% Katalysator, bezogen auf den Gesamtschwefel, einsetzt.

7. Verfahren nach den Ansprüchen 1 bis 6,
**dadurch gekennzeichnet,**
daß man die Reaktionsmischung während des Durchleitens von Luft rührt.

8. Verfahren nach den Ansprüchen 1 bis 7,
**dadurch gekennzeichnet,**
daß man die selektive Oxidation des sulfidischen Schwefels bei 50 - 80° C durchführt.

9. Verfahren nach den Ansprüchen 1 bis 8,
**dadurch gekennzeichnet,**
daß das in der Lösung des Natriumthiocyanatprodukts enthaltene Natriumhydroxid mittels Durchleiten bzw. Einblasen von Kohlendioxid in Natriumcarbonat umgewandelt und das als Feststoff ausgefallene oder durch Kühlen ausgefällte Carbonat aus der dann sodaalkalischen Produktlösung entfernt wird.

## Claims

1. A process for the removal of sodium polysulphide from spent sodium/sulphur batteries with recovery of an alkaline sodium thiocyanate solution, characterised by mechanical size reduction of the batteries or of the sets of cells removed from the battery boxes and containing sodium polysulphide and optionally residues of sodium to form a fine scrap composed of particles of up to 30 mm in diameter, treatment of the scrap, with stirring, with an aqueous sodium cyanide solution whose cyanide content is in a molar ratio of 1 : 1 to the total sulphur present, consisting of S⁰ or S⁻², separation of the insoluble components of the scrap from the solution, the addition of manganese dioxide as catalyst to the solution in a quantity of from 0.1 to 20% by weight, based on the total sulphur content, and selective oxidation of the sulphidic sulphur by passing air through the solution at temperatures in the range of from room temperature to 110°C for the intermediate formation of elementary sulphur and for its reaction with the remaining sodium cyanide present to form sodium thiocyanate.

2. Process for the removal of sodium polysulphide from spent sodium sulphide/sulphur batteries with recovery of an alkaline sodium thiocyanate solution, characterised by the mechanical size reduction of the batteries or of the sets of cells removed from the battery boxes and containing sodium polysulphide and optionally residues of sodium to form a fine scrap composed of particles of up to 30 mm in diameter, addition of the scrap and of from 0.1 to 20% by weight of manganese dioxide as catalyst, based on the total sulphur content, to an aqueous sodium cyanide solution whose cyanide content is in a molar ratio of 1:1 to the total sulphur present, consisting of S⁰ or S⁻², selective oxidation of the sulphidic sulphur by the passage of air through the solution at temperatures in the range of from room temperature to 110°C for the intermediate formation of elementary sulphur and for its reaction with the remaining sodium cyanide present to form sodium thiocyanate and separation of the insoluble components from the aqueous solution of the sodium thiocyanate product.

3. Process according to Claim 1 or 2, characterised in that the mechanical size reduction of the batteries or of the sets of cells takes place in an atmosphere of steam or inert gas.

4. Process according to Claims 1 to 3, characterised in that the batteries or the sets of cells are size reduced to scrap composed of particles of < 10 mm in diameter.

5. Process according to Claims 1 to 4, characterised in that the scrap is treated with the sodium cyanide solution or, when the procedure according to Claim 2 is employed, it is treated with the sodium cyanide solution in the presence of the catalyst with reheating to the boiling temperature.

6. Process according to Claims 1 to 5, characterised in that from 2 to 7% by weight of catalyst, based on the total sulphur content, is used.

7. Process according to Claims 1 to 6, characterised in that the reaction mixture is stirred while air is passed through it.

8. Process according to Claims 1 to 7, characterised in that the selective oxidation of sulphidic sulphur is carried out at 50 - 80°C.

9. Process according to Claims 1 to 8, characterised in that the sodium hydroxide present in the solution of the sodium thiocyanate product is converted into sodium carbonate by the injection or passage of carbon dioxide through the solution and the carbonate precipitated as solid substance or precipitated by cooling is removed from the product solution which is then alkaline with sodium.

## Revendications

1. Procédé pour la récupération de polysulfure de sodium à partir de batteries au sodium/soufre usagées, avec obtention d'une solution alcaline de thiocyanate de sodium, caractérisé par la fragmentation mécanique des batteries ou des éléments retirés des boîtiers de batteries et contenant du polysulfure de sodium et éventuellement des restes de sodium, pour l'obtention d'une fine grenaille ayant un diamètre de grains allant jusqu'à 30 mm, le traitement de la grenaille par une solution aqueuse de cyanure de sodium, dont la teneur en cyanure se situe dans le rapport molaire de 1:1 par rapport au soufre total présent, constitué de S⁰ ou S⁻², sous agitation, la séparation des fractions insolubles de la grenaille d'avec la solution, l'addition à la solution de, par rapport au soufre total, 0,1 à 20 % en poids de bioxyde de manganèse en tant que catalyseur, et l'oxydation sélective du soufre sulfureux, par introduction d'air à des températures dans la plage allant de la température ambiante à 110°C, pour la formation intermédiaire de soufre élémentaire et pour la réaction de celui-ci avec le cyanure de sodium résiduel présent pour l'obtention de thiocyanate de sodium.

2. Procédé pour la récupération de polysulfure de sodium à partir de batteries au sodium/soufre usagées, avec obtention d'une solution alcaline de thiocyanate de sodium, caractérisé par la framgentation mécanique des batteries ou des éléments contenant du polysulfure de sodium et éventuellement des résidus de sodium et retirés des boîtiers de batteries, en une fine grenaille ayant un diamètre de grains allant jusqu'à 30 mm, l'addition à une solution aqueuse de cyanure de sodium, dont la teneur en cyanure se situe dans le rapport molaire 1:1 par rapport au soufre total présent, constitué de S⁰ ou S⁻² , sous agitation, de la grenaille et de, par rapport au soufre total, 0,1 à 20 % en poids de bioxyde de manganèse en tant que catalyseur, l'oxydation sélective du soufre sulfureux, en faisant passer de l'air à des températures dans la plage allant de la température ambiante à 110°C, pour la formation intermédiaire de soufre élémentaire et la réaction de celui-ci avec le cyanure de sodium résiduel présent, pour l'obtention de thiocyanate de sodium, et la séparation des fractions insolubles d'avec la solution aqueuse du thiocyanate de sodium produit.

3. Procédé selon la revendication 2, caractérisé en ce que la fragmentation mécanique des batteries ou des éléments de batteries est effectuée sous gaz inerte ou sous atmosphère de vapeur d'eau.

4. Procédé selon l'une quelconque des revendications 1 à 3, caractérisé en ce que les batteries ou les éléments de batteries sont fragmentés en grenaille ayant un diamètre de grains < 10 mm.

5. Procédé selon l'une quelconque des revendications 1 à 4, caractérisé en ce que l'on traite la grenaille par la solution de cyanure de sodium, ou, lorsqu'on opère selon la revendication 2, par celle-ci en présence du catalyseur avec post-chauffage à la température d'ébullition.

6. Procédé selon l'une quelconque des revendications 1 à 5, caractérisé en ce que l'on utilise 2-7 % en poids de catalyseur, par rapport au soufre total.

7. Procédé selon l'une quelconque des revendications 1 à 6, caractérisé en ce que l'on agite le mélange réactionnel pendant le passage de l'air.

8. Procédé selon l'une quelconque des revendications 1 à 7, caractérisé en ce que l'on effectue l'oxydation sélective du soufre sulfureux à 50-80°C.

9. Procédé selon l'une quelconque des revendications 1 à 8, caractérisé en ce que l'hydroxyde de sodium contenu dans la solution du thiocyanate de sodium produit est converti en carbonate de sodium par passage ou insufflation de dioxyde de carbone, et le carbonate déposé par refroidissement ou précipité sous forme de substance solide est ensuite éliminé de la solution de produit, alcaline par le carbonate de sodium.
